# EUROPEAN PATENT APPLICATION

(11) **EP 2 541 671 A1**
(43) Date of publication of application: **02.01.2013**
(21) Application number: 10846332.4
(22) Date of filing: 31.12.2010
(51) Int. Cl.: H01M 14/00

(54) **CAPACITOR CELL WITH HIGH-SPECIFIC-ENERGY ORGANIC SYSTEM**

(30) Priority: 26.02.2010 CN 201010114600
(71) Applicant: Shanghai Aowei Technology Development Co., Ltd., Shanghai 201203 (CN)
(72) Inventor: YANG, Endong, Shanghai 201203 (CN); AN, Zhongxun, Shanghai 201203 (CN); WU, Mingxia, Shanghai 201203 (CN); CAO, Xiaowei, Shanghai 201203 (CN)
(74) Representative: Langley, Peter James
(86) International application number: PCT/CN2010/002248
(87) International publication number: WO 2011/103708

(57) **Abstract**

A capacitor cell with a high-specific-energy organic system is provided. The capacitor cell consists of a positive electrode, a negative electrode, a separator interposed between the positive electrode and the negative electrode, and an organic electrolyte. The positive electrode comprises a mixture of lithium ion insertion compounds and porous carbon materials. The negative electrode is hard carbon. The electrolyte contains an organic solvent electrolyte containing lithium ions. The super capacitor cell has high energy density of 20-90 Wh/Kg and high power density of greater than 4500 W/Kg, which can be widely used in electric automobiles, electric tools, solar energy storage devices, wind energy storage devices and portable appliances.

## Description

### FIELD OF THE INVENTION

The present invention relates generally to the field of capacitor and battery technology and more particularly to supercapacitors and lithium-ion batteries.

### BACKGROUND

A super capacitor is a new type of electrochemical energy storage device between traditional capacitor and battery, which has a higher energy density compared to traditional capacitors. The electrostatic capacity can be up to one thousand Farahs or even ten thousand Farahs. It has a higher power density and long cycle life compared to the battery, so it combines the advantages of traditional capacitors and batteries, and it is a chemical power source with promising application potential. It has strengths such as high specific energy, high power density, long cycle life, wide working temperature range and is maintenance-free.

In accordance with different energy storage principles, super capacitors can be classified into three categories: electric double layer capacitor (EDLC), Faraday Pseudo-capacitance super capacitor and hybrid super capacitor. The electric double layer capacitor achieves energy storage by storing electric charge on the double layers (surface of both electrodes). Faraday pseudo-capacitance super capacitors store energy by the Faradic pseudo-capacitor generated by the fast oxidation reaction at the surface of the electrode. ; whereas A hybrid super capacitor is a device, wherein one end is a non-polarized electrode (such as nickel hydroxide), and the other end is the polarized electric double layer capacitor electrode (activated carbon). This hybrid design can significantly improve the energy density of super capacitors.

Super capacitors can be classified into inorganic super capacitors, organic super capacitors and polymer super capacitors by the electrolyte used. What are used mostly as inorganic electrolytes are aqueous solutions such as high concentrated acids (such as H₂SO₄) or bases (KOH). Neutral aqueous electrolytes are rarely used in actual application. Organic electrolytes generally comprise mixed electrolytes of quaternary ammonium salt or lithium salt as the solvent, and organic solvents (eg acetonitrile) with high electrical conductivity. Polymer electrolytes are only in laboratory stage, and there is still no commercial products.

Super capacitors using organic electrolytes can greatly improve the operating voltage of the capacitor. The equation E = 1/2 CV 2 shows that it is a great help to improve the energy density of the capacitor. Today, the mature organic super capacitor technology generally uses, for example, a symmetrical structure. The anode and the cathode are both carbon materials, the electrolyte comprises a quaternary ammonium salt as the solvent and organic solvents (eg acetonitrile). It has high power density, which can reach 5000 the -6000W/Kg, but its energy density is low, which is only 3-5Wh/Kg. Therefore, in order to further improve the energy density of organic super capacitors, hybrid structural design, for example, uses different active materials for the anode and the cathode. In recent years, the study of organic hybrid super capacitors jas increased, resulting in the emergence of the organic hybrid super capacitor using activated carbon as the anode, lithium titanate as the cathode or the organic hybrid super capacitor uses polythiophene as the anode, lithium titanate as the cathode. In patent 200510110461.5, the anode is LiMn _{2-X} M_{X}O₄, the cathode is activated carbon, and the maximum energy density of the cell is up to 50Wh/Kg (calculated based on total mass of the positive and negative active material). However, energy density and power density of such an organic hybrid super capacitor is not satisfactory. In patent 200710035205.3, the anode is a mixture of lithium-ion intercalation compounds with porous carbon and their compounds, and the cathode is a mixture of porous carbon and graphite and their compounds. Such a supercapacitor's specific power at room temperature will increase due to the use of porous carbon on the cathode due to negative the introduction of porous carbon, , but at a high temperature cathode porous carbon will be electrolytically decomposed, making it hardly practical.

### DESCRIPTION OF THE INVENTION

Based on the problems mentioned above, the present invention uses a hard carbon material with high energy and power density in the cathode, and activated carbon with limitless cycle life as part of anode, resulting in an energy density and power density of a super capacitor that is greatly enhanced, by keeping its characteristics such as high power density, long cycle life, no pollution, high safety, and maintenance-fee etc., which also further broadens the application fields of super capacitors.

Details of present invention are as follows: An organic capacitor battery with high specific energy and high specific power is composed of an anode, a cathode, a separator in-between the anode and cathode, and an organic electrolyte. The characteristics of the capacitor battery are that its anode is a mixture of porous carbon materials with a lithium-ion intercalation compound, its cathode is hard carbon, and the electrolyte is an organic solvent electrolyte containing lithium ions.

In one embodiment, the hard carbon as described, should include at least one of resin carbon, organic polymer pyrolytic carbon and soft carbon carbonized material or mixtures thereof.

In another embodiment, the lithium-ion intercalation compounds in the organic capacitor battery as described should include at least one of: LiCoO**₂**, LiMn₂O₄, LiNiO₂, LiFePO₄, LiNi_{0.8}Co_{0.2}O₂, LiNi_{1/3} CO_{1/3} Mn_{1/3}O₂, LiMnO₂ or mixtures therof.

In yet another embodiment, the porous carbon in the organic capacitor battery should include at least one of activated carbon, carbon cloth, carbon fiber, carbon fiber felt, carbon aerogels, carbon nanotubes or mixtures thereof.

In one embodiment, the lithium ions in the electrolyte in capacitor battery should be generated from at least one of LiClO₄, LiBF₄, LiPF₆,LiCF₃SO₃ LiN(CF₃SO₂),LiBOB,LiAsF₆, mixed with at least or a mixture of Me₃EtNBF₄, Me₂Et₂NBF₄, MeEt₃NBF₄, Et₄NBF₄, Pr₄NBF₄, MeBu₃NBF₄, Bu₄NBF₄, Hex₄NBF₄, Me₄PBF₄, Et₄PBF₄, or Pr₄PBF₄. Bu₄PBF₄; and the high specific energy/high super battery may further comprise carbonate, ethyl methyl carbonate, Methyl Propyl Carbonate, sulfurous acid vinyl ester, acrylic ester of sulfurous acid, acetic acid, vinyl acetate or acetonitrile

In another embodiment, the separator in the organic capacitor battery should include one of polyethylene micro porous composite membrane, polypropylene micro porous membrane, polypropylene/polyethylene composite membrane, inorganic ceramic membrane, paper membrane and non-woven cloth membrane.

In yet another embodiment, the method of making the organic capacitor battery should include:
(1) The preparation steps of the positive electrode of lithium-ion intercalation compound: blend the mixtures of lithium-ion intercalation compound, the conductive agent, a binder, stir them into a paste, then coat them onto the anode current collector, after drying, grinding, cutting, vacuum-drying to form the final positive electrode;
(2) The preparation steps of the negative electrode: blend hard carbon, conductive agent and binder, stir them into a paste, then coat them onto the cathode current collector, after drying, grinding, cutting and vacuum drying , the final negative electrode is formed;
(3) Assembly steps: the cell is made by stacking or winding positive and negative electrodes; then put the cell into the aluminum-plastic composite case, aluminum case, plastic case, or steel case for seal. Then inject in non-aqueous electrolyte, in which organic solvent contains lithium ions salt.

In one embodiment, the conductive agents should include one of natural graphite, artificial graphite, carbon black, acetylene black, mesophase carbon microbeads, hard carbon, petroleum coke, carbon nanotubes, graphene or mixtures thereof and binders include one or several of polytetrafluoroethylene, polyvinylidene fluoride, ethylene, hydroxypropyl methyl cellulose, carboxymethyl cellulose, and styrene butadiene rubber.

In another embodiment, the positive electrode current collectors should include aluminum foil or aluminum mesh and the negative electrode current collectors include copper foil or copper mesh.

Various embodiments of the present invention use a hard carbon material with high energy and power density in the cathode, and activated carbon with limitless cycle life as part of the anode, which makes a super capacitor with high energy density and power density (based on the actual mass of super capacitor). It can be applied in the field of electric vehicles, power tools, solar energy storage, wind energy storage, portable home appliances.

The present invention relates to an organic capacitor battery with high specific energy and high specific power, which is composed of n anode, a cathode, a separator in-between the anode an cathode, and an organic electrolyte. The anode is a mixture of porous carbon materials with a lithium-ion intercalation compound, the cathode is hard carbon, and the electrolyte is an organic solvent electrolyte containing lithium ions.

In one embedment, the hard carbon as described in the present invention generally refers to nongraphitizable carbon, which has a high specific energy, (up to 300-700mAh /g), and good charge/discharge rate capability, while the lithium-ions embedded in such materials do not cause significant structural expansion. In addition, the hard carbon has a good charge-discharge cycle performance, and includes resin carbon and organic polymer pyrolytic carbon. In one embodiment, the resin carbon can include carbon-phenolic resin, epoxy carbon, poly Furfuryl alcohol resin carbon and furfural resin carbon. In another embodiment, the organic polymer pyrolytic carbon as described includes benzene, carbon, poly Furfuryl alcohol hot solution of carbon, PVC, pyrolytic carbon, or Phenolic pyrolytic carbon.

In one embodiment, the lithium-ion intercalation compounds in the organic capacitor battery as described include: LiCoO₂, LiMn₂O₄, LiNiO₂, LiFePO₄, LiNi_{0.8}Co_{0.2}O₂, LiNi_{1/3}Co_{1/3} Mn_{1/3}O₂, LiMnO₂ etc. Lithium ions usually demonstrate very good reversibility in intercalation and deintercalation process in such materials, and also good diffusion speed, accompanied by small volume change during the reaction, resulting in good cycle characteristics and high current characteristics.

In another embodiment, the lithium ion salt in the electrolyte in the capacitor battery should include at least one of LiClO₄, LiBF₄, LiPF₆, LiCF₃SO₃, LiN(CF₃SO₂), LiBOB, or LiAsF₆; and the non-aqueous organic solvent includes one or several of ethylene carbonate, propylene carbonate, gamma-butyrolactone, dimethyl carbonate, diethyl carbonate, butylene ester carbonate, ethyl methyl carbonate, Methyl Propyl Carbonate, sulfurous acid vinyl ester, acrylic ester of sulfurous acid, ethyl acetate and acetonitrile. Organic electrolyte containing lithium salt has high ionic conductivity, and can provide fast access for the migration of lithium ions in the charge-discharge process to increase the reaction rate. It has a wide electrochemical stability potential range (stable between 0-5V), and also good thermal stability, and wide temperature range, charge and discharge reaction stability of capacitor battery will be greatly enhanced, the cycle life of capacitor battery will also be improved. In yet another embodiment, the separator as described in the present invention includes polyethylene micro-pore membrane (PE), polypropylene micro-pore membrane (PP), composite film (PP + PE + PP), inorganic ceramic membrane or paper diaphragm, and its thickness is usually between 10-30 µ m, pore size between 0.03 µ m-0.05 µ m, with good adsorption capacity and good thermostability.

In one embodiment, the positive electrode current collector as described in present invention, uses aluminum foil or aluminum mesh, while the negative electrode current collector uses copper foil or copper mesh. The right amount of conductive agent and binder is added in the production of the electrode. In another embodiment, the conductive agent used in the present invention is graphite, carbon black, acetylene black, or their mixtures with a high conductivity. In yet another embodiment, the binder of the present invention uses one or several of polytetrafluoroethylene (PTFE), polyvinylidene fluoride (PVDF), hydroxypropyl methyl cellulose (HPMC), carboxymethyl cellulose (CMC) and styrene butadiene rubber (SBR).

In one embodiment, the method of making the positive electrode includes: weigh proportionate lithium-ion intercalation compound, porous carbon material, conductive agent, and binder; blend and stir them into a paste; then coat them onto the anode current collector; after drying, grinding, cutting, vacuum-drying to form the final positive electrode. In another embodiment, the method of making the negative electrode includes: blend proportionate hard carbon and binder; stir them into a paste; then coat them onto the cathode current collector; after drying, grinding, cutting and vacuum drying, the final negative electrode is formed.

In one embodiment, the cell could be made according to needs by stacking or winding positive and negative electrodes into prismatic or cylindrical shape, then putting the cell into the aluminum-plastic composite case, aluminum case, plastic case, or steel case for seal, followed by injecting in non-aqueous electrolyte, in which organic solvent contains lithium ions salt. The resulting cell has high power density and energy density.

### EXAMPLES

The main raw materials used in the following examples are as follows:
LiMn₂O₄ - Shijiazhuang Best Battery Materials Co., Ltd;
LiCoO₂ - Hunan Xiangrui New Material Co., Ltd., model R747;
LiNiO₂ - CITIC GUOAN MGL;
LiFePO₄-Tianjing STL-Energy Technology Co,. Ltd. Model: SLFP-ES01
LiNi_{0.8}Co_{0.2}O₂ -GUANGZHOU HONGSEN MATERIAL.CO.,LTD
LiNi_{1/3}Co_{1/3} Mn_{1/3}O₂-Xinxiang Huaxin Energy Materials, Inc.
Porous carbon - Kuraray in Japan, Model YP-17D;
PVDF (Polyvinylidene fluoride) - Shanghai 3F New Materials Co., Ltd., model FR921 ;
NMP (1-methyl-2-pyrrolidone) -Shanghai Experiment Reegent Co., Ltd.;
Conductive carbon black - TIMCAL Inc., model Super-P;
Three-layer composite diaphragm (PP / PE / PP) - Japan's Ube production

### Example 1

The preparation steps of the positive electrode: mix a total of 500g of LiMn₂O₄, activated carbon, the conductive carbon black and PVDF in a mass ratio of 45: 45:5: 5, with NMP, and stir into a paste. The next step is to coat the paste onto the 20µm-thick aluminum foil (weight increase after coating: 140mg/cm²), followed by the process of drying (110-120°C), grinding, cutting (size: 37.5*59.5mm²) and 24h vacuum drying(at 120-130°C), after which the positive electrode is ready. The preparation steps of the negative electrode are as follows: a total of 500g of hard carbon and PVDF in a mass ratio of 90:10 are blended into paste, the paste is coated onto the 16µm aluminum foil (weight increase after coating: 90mg/cm²⁾, after the process of drying (110- 120°C), grinding, cutting (size: 37.5*59.5mm²) and 24h vacuum drying (120-130°C), the resulting negative electrode is ready. A three-layer composite membrane is selected as a separator. The positive electrode (8 pieces of positive electrodes), separator, and the negative electrodes (9pieces) are stacked to form a cell. The positive electrodes are held together, and welded onto an aluminum lug. While holding the negative electrode together, a nickel lug is welded. The welded cell is put into the aluminum plastic composite case, and 10g of 1mol/L LiPF₆ - EC(ethylene carbonate)/DEC(diethyl carbonate) (1:1) electrolyte is injected to form a prismatic super capacitor battery. Afterwards, electrochemical formation, performance testing of the super battery is carried out. The testing procedures include charging with a current of 5A to 4.2V, shelving for 5min, and then discharging at 5A to 2.5V. Specific energy of the resulting super capacitor battery is 50Wh/kg and the specific power is 5000W/kg. After 10,000 cycles of charge-discharge at 5A, capacitance of the super capacitor battery remains 80%.

### Example 2

The preparation steps of the positive electrode: mix a total of 500g of LiMn₂O₄, activated carbon, the conductive carbon black and PVDF in a mass ratio of 20: 70:5: 5, with NMP, and stir into a paste. The next step is to coat the paste onto the 20µm-thick aluminum foil (weight increase after coating: 140mg/cm²), after the process of drying (110-120°C), grinding, cutting (size: 37.5*59.5mm²) and 24h vacuum drying(120-130°C) , a positive electrode is formed.

The preparation steps of the negative electrode are as follows: a total of 500g of hard carbon and PVDF in a mass ratio of 90:10 are blended into paste, then coat the paste onto the 16µm aluminum foil (weight increase after coating: 90mg/cm²⁾, after the process of drying (110- 120°C), grinding, cutting (size: 37.5*59.5mm²⁾ and 24h vacuum drying (120-130°C) , a negative electrode is formed. A three-layer composite membrane is selected as a separator. The positive electrode (8 pieces of positive electrodes), separator, and the negative electrodes (9pieces) are stacked to form a cell. The positive electrodes are held together, and welded onto an aluminum lug; the negative electrode is held together and welded onto a nickel lug. The welded cell is placed into the aluminum plastic composite case, and 10g of 1mol/L LiPF₆ - EC(ethylene carbonate)/DEC(diethyl carbonate) (1:1) electrolyte is injected in to form a prismatic super capacitor battery. After electrochemical formation, performance testing of the super battery is carried out. The testing procedures are as follows: charge with a current of 5A to 4.2V, shelve for 5min, and then discharge at 5A to 2.5V. The resulting specific energy of the super capacitor battery is 21Wh/kg and the specific power is 5500W/kg. After 10,000 cycles of charge-discharge at 5A, the capacitance of the super capacitor battery remains at 85%.

### Example 3

The preparation steps of the positive electrode: mix a total of 500g of LiMn₂O₄, activated carbon, the conductive carbon black and PVDF in a mass ratio of 85: 5:5: 5, with NMP, and stir into a paste. The next step is to coat the paste onto the 20µm-thick aluminum foil (weight increase after coating: 140mg/cm²), after the process of drying (110-120°C), grinding, cutting (size: 37.5*59.5mm²⁾ and 24h vacuum drying(120-130°C) , a positive electrode is formed.

The preparation steps of the negative electrode are as follows: a total of 500g of hard carbon and PVDF in a mass ratio of 90:10 are blended into paste, and coated onto the 16µm aluminum foil (weight increase after coating: 90mg/cm²⁾. After the process of drying (110- 120°C), grinding, cutting (size: 37.5*59.5mm²⁾ and 24h vacuum drying (120-130°C) , a negative electrode is ready. A three-layer composite membrane is selected as a separator. The positive electrode (8 pieces of positive electrodes), separator, and the negative electrodes (9pieces) are stacked to form a cell. The positive electrodes are held together and welded onto an aluminum lug. The negative electrodes are held together and welded onto a nickel lug. The welded cell is placed into the aluminum plastic composite case, and 10g of 1mol/L LiPF₆ - EC(ethylene carbonate)/DEC(diethyl carbonate) (1:1) electrolyte is injected in to form a prismatic super capacitor battery. After electrochemical formation, performance testing of the super battery is carried out. The testing procedures are as follows: charge with a current of 5A to 4.2V, shelve for 5min, and then discharge at 5A to 2.5V. The resulting specific energy of the super capacitor battery is 50Wh/kg and the specific power is 4300W/kg. After 10,000 cycles of charge-discharge at 5A, the capacitance of the super capacitor battery remains at 65%.

### Example 4

The preparation steps of positive electrode: mix a total of 500g of LiCoO₂, porous carbon, the conductive carbon black and PVDF in a mass ratio of 45: 45:5: 5 with NMP, and stir into a paste. Coat the paste onto the 20µm-thick aluminum foil (weight increase after coating: 140mg/cm²⁾. After the process of drying (110-120°C), grinding, cutting (size: 37.5*59.5mm²⁾ and 24h vacuum drying(120-130°C) , a positive electrode is formed.

The preparation steps of negative electrode are as follows: a total of 500g of hard carbon and PVDF in a mass ratio of 90:10 are blended into paste and coated onto the 16µm aluminum foil (weight increase after coating: 90mg/cm²⁾. After the process of drying (110- 120°C), grinding, cutting (size: 37.5*59.5mm²⁾ and 24h vacuum drying (120-130°C) , a negative electrode is formed. A three-layer composite membrane is selected as a separator. The positive electrode (8 pieces of positive electrodes), separator, and the negative electrodes (9pieces) are stacked to form a cell. The positive electrodes are held together and welded onto an aluminum lug. The negative electrode are held together and welded onto a nickel lug. The welded cell are placed into the aluminum plastic composite case, and 10g of 1mol/L LiPF₆ - EC(ethylene carbonate)/DEC(diethyl carbonate) (1:1) electrolyte is inject in to form a prismatic super capacitor battery. After electrochemical formation, performance testing of the super battery is carried out. The testing procedures are as follows: charge with a current of 5A to 4.2V, shelve for 5min, and then discharge at 5A to 2.5V. The resulting specific energy of the super capacitor battery is 61Wh/kg and the specific power is 4800W/kg. After 10,000 cycles of charge-discharge at 5A, the capacitance of the super capacitor battery remains at 91 %.

### Example 5

The preparation steps of a positive electrode: mix a total of 500g of LiCoO₂, porous carbon, the conductive carbon black and PVDF in a mass ratio of 20: 70:5: 5 with NMP and stir into a paste. Coat the paste onto the 20µm-thick aluminum foil (weight increase after coating: 140mg/cm²⁾. After the process of drying (110-120°C), grinding, cutting (size: 37.5*59.5mm²⁾ and 24h vacuum drying(120-130°C) , a positive electrode is formed.

The preparation steps of a negative electrode are as follows: a total of 500g of hard carbon and PVDF in a mass ratio of 90:10 are blended into paste, and coated onto the 16µm aluminum foil (weight increase after coating: 90mg/cm²⁾. After the process of drying (110- 120°C), grinding, cutting (size: 37.5*59.5mm²⁾ and 24h vacuum drying (120-130°C) , a negative electrode is formed. A three-layer composite membrane is selected as a separator. The positive electrode (8 pieces of positive electrodes), separator, and the negative electrodes (9pieces) are stacked to form a cell. The positive electrodes are held together and welded onto an aluminum lug. The negative electrode are held together and welded onto a nickel lug. The welded cell is placed into the aluminum plastic composite case, and 10g of 1mol/L LiPF₆ - EC(ethylene carbonate)/DEC(diethyl carbonate) (1:1) electrolyte is inject to form a prismatic super capacitor battery. After electrochemical formation, performance testing of the super battery is carried out. The testing procedures are as follows: charge with a current of 5A to 4.2V, shelve for 5min, and then discharge at 5A to 2.5V. The resulting specific energy of the super capacitor battery is 31Wh/kg and the specific power is 5200W/kg. After 10,000 cycles of charge-discharge at 5A, capacitance of the super capacitor battery remains at 94%.

### Example 6

The preparation steps of positive electrode: mix a total of 500g of LiCoO₂, porous carbon, the conductive carbon black and PVDF in a mass ratio of 85: 5:5: 5 with NMP, and stir into a paste. Coat the paste onto the 20µm-thick aluminum foil (weight increase after coating: 140mg/cm²⁾. After the process of drying (110-120°C), grinding, cutting (size: 37.5*59.5mm²⁾ and 24h vacuum drying(120-130°C) , a positive electrode is formed.

The preparation steps of negative electrode are as follows: a total of 500g of hard carbon and PVDF in a mass ratio of 90:10 are blended into a paste. Coat the paste onto the 16µm aluminum foil (weight increase after coating: 90mg/cm²⁾. After the process of drying (110- 120°C), grinding, cutting (size: 37.5*59.5mm²⁾ and 24h vacuum drying (120-130°C) , a negative electrode is formed. A three-layer composite membrane is selected as a separator. The positive electrode (8 pieces of positive electrodes), separator, and the negative electrodes (9pieces) are stacked to form a cell. The positive electrodes are held together and welded onto an aluminum lug. The negative electrode are held together and welded on a nickel lug. The welded cell is placed into the aluminum plastic composite case, and 10g of 1mol/L LiPF₆ - EC(ethylene carbonate)/DEC(diethyl carbonate) (1:1) electrolyte is inject in to form a prismatic super capacitor battery. After electrochemical formation, performance testing of the super battery is carried out. The testing procedures are as follows: charge with a current of 5A to 4.2V, shelve for 5min, and then discharge at 5A to 2.5V. The resulting specific energy of the super capacitor battery is 70Wh/kg and the specific power is 5200W/kg. After 10,000 cycles of charge-discharge at 5A, capacitance of the super capacitor battery remains at 85%.

### Example 7

The preparation steps of positive electrode: mix a total of 500g of LiNiO₂, porous carbon, the conductive carbon black and PVDF in a mass ratio of 45: 45:5: 5 with NMP, and stir into a paste. Coat the paste onto the 20µm-thick aluminum foil (weight increase after coating: 140mg/cm²). After the process of drying (110-120°C), grinding, cutting (size: 37.5*59.5mm²⁾ and 24h vacuum drying(120-130°C) , a positive electrode is formed.

The preparation steps of negative electrode are as follows: a total of 500g of hard carbon and PVDF in a mass ratio of 90:10 are blended into paste, and coated onto the 16µm aluminum foil (weight increase after coating: 90mg/cm²⁾. After the process of drying (110- 120°C), grinding, cutting (size: 37.5*59.5mm²⁾ and 24h vacuum drying (120-130°C) , a negative electrode is formed. A three-layer composite membrane is selected as a separator. The positive electrode (8 pieces of positive electrodes), separator, and the negative electrodes (9pieces) are stacked to form a cell. The positive electrodes are held together, and welded onto an aluminum lug. The negative electrode are held together and welded onto a nickel lug. The welded cell is placed into the aluminum plastic composite case, and 10g of 1mol/L LiPF₆ - EC(ethylene carbonate)/DEC(diethyl carbonate) (1:1) electrolyte is inject in to form a prismatic super capacitor battery. After electrochemical formation, performance testing of the super battery is carried out. The testing procedures are as follows: charge with a current of 5A to 4.2V, shelve for 5min, and then discharge at 5A to 2.5V. The resulting specific energy of the super capacitor battery is 76Wh/kg and specific power is 4947W/kg. After 10,000 cycles of charge-discharge at 5A, capacitance of the super capacitor battery remains at 85%.

### Example 8

The preparation steps of positive electrode: mix a total of 500g of LiNiO₂, porous carbon, the conductive carbon black and PVDF in a mass ratio of 20: 70:5: 5 with NMP, and stir into a paste. Coat the paste onto the 20µm-thick aluminum foil (weight increase after coating: 140mg/cm²). After the process of drying (110-120°C), grinding, cutting (size: 37.5*59.5mm²⁾ and 24h vacuum drying(120-130°C) , a positive electrode is formed.

The preparation steps of negative electrode are as follows: a total of 500g of hard carbon and PVDF in a mass ratio of 90:10 are blended into paste, and coated onto the 16µm aluminum foil (weight increase after coating: 90mg/cm²⁾. After the process of drying (110- 120°C), grinding, cutting (size: 37.5*59.5mm²⁾ and 24h vacuum drying (120-130°C) , a negative electrode is formed. A three-layer composite membrane is selected as a separator. The positive electrode (8 pieces of positive electrodes), separator, and the negative electrodes (9pieces) are stacked to form a cell. The positive electrodes are held together and welded onto an aluminum lug. The negative electrode are held together and welded onto a nickel lug. The welded cell is placed into the aluminum plastic composite case, and 10g of 1mol/L LiPF₆ - EC(ethylene carbonate)/DEC(diethyl carbonate) (1:1) electrolyte is inject in to form a prismatic super capacitor battery. After electrochemical formation, performance testing of the super battery is carried out. The testing procedures are as follows: charge with a current of 5A to 4.2V, shelve for 5min, and then discharge at 5A to 2.5V. The resulting specific energy of the super capacitor battery is 37.5Wh/kg and yje specific power is 5452W/kg. After 10,000 cycles of charge-discharge at 5A, capacitance of the super capacitor battery remains at 92%.

### Example 9

The preparation steps of positive electrode: mix a total of 500g of LiNiO₂, porous carbon, the conductive carbon black and PVDF in a mass ratio of 85: 5:5: 5 with NMP, and stir into a paste. Coat the paste onto the 20µm-thick aluminum foil (weight increase after coating: 140mg/cm²⁾. After the process of drying (110-120°C), grinding, cutting (size: 37.5*59.5mm²⁾ and 24h vacuum drying(120-130°C) , a positive electrode is formed.

The preparation steps of negative electrode are as follows: a total of 500g of hard carbon and PVDF in a mass ratio of 90:10 are blended into paste, then coated onto the 16µm aluminum foil (weight increase after coating: 90mg/cm²⁾. After the process of drying (110- 120°C), grinding, cutting (size: 37.5*59.5mm²⁾ and 24h vacuum drying (120-130°C), a negative electrode is formed. A three-layer composite membrane is selected as a separator. The positive electrode (8 pieces of positive electrodes), separator, and the negative electrodes (9pieces) are stacked to form a cell. The positive electrodes are held together and welded onto an aluminum lug. The negative electrode are held together and welded onto a nickel lug. The welded cell is placed into the aluminum plastic composite case, and 10g of 1mol/L LiPF₆ - EC(ethylene carbonate)/DEC(diethyl carbonate) (1:1) electrolyte is injected in to form a prismatic super capacitor battery. After electrochemical formation, performance testing of the super battery is carried out. The testing procedures are as follows: charge with a current of 5A to 4.2V, shelve for 5min, and then discharge at 5A to 2.5V. The resulting specific energy of the super capacitor battery is 81Wh/kg and the specific power is 4232W/kg. After 10,000 cycles of charge-discharge at 5A, capacitance of the super capacitor battery remains at 80%.

### Example 10

The preparation steps of a positive electrode: mix a total of 500g of LiFePO₄, porous carbon, the conductive carbon black and PVDF in a mass ratio of 45: 45:5: 5 with NMP, and stir into a paste. Coat the paste onto the 20µm-thick aluminum foil (weight increase after coating: 140mg/cm²). After the process of drying (110-120°C), grinding, cutting (size: 37.5*59.5.5mm²⁾ and 24h vacuum drying(120-130°C) , a positive electrode is formed.

The preparation steps of negative electrode are as follows: a total of 500g of hard carbon and PVDF in a mass ratio of 90:10 are blended into paste, and coated onto the 16µm aluminum foil (weight increase after coating: 90mg/cm²⁾. After the process of drying (110- 120°C), grinding, cutting (size: 37.5*59.5mm²⁾ and 24h vacuum drying (120-130°C) , a negative electrode is formed. Three-layer composite membrane is selected as a separator. The positive electrode (8 pieces of positive electrodes), separator, and the negative electrodes (9pieces) are stacked to form a cell. The positive electrodes are held together, and welded onto an aluminum lug. The negative electrode are held together, and welded onto a nickel lug. The welded cell is placed into the aluminum plastic composite case, and 10g of 1mol/L LiPF₆ - EC(ethylene carbonate)/DEC(diethyl carbonate) (1:1) electrolyte is inject in to form a prismatic super capacitor battery. After electrochemical formation, performance testing of the super battery is carried out. The testing procedures are as follows: charge with a current of 5A to 3.7V, shelve for 5min, and then discharge at 5A to 2.3V. The resulting specific energy of the super capacitor battery is 55Wh/kg and the specific power is 5452W/kg. After 10,000 cycles of charge-discharge at 5A, capacitance of the super capacitor battery remains at 94%.

### Example 11

The preparation steps of a positive electrode: mix a total of 500g of LiFePO₄, porous carbon, the conductive carbon black and PVDF in a mass ratio of 20: 70:5: 5with NMP, and stir into a paste. Coat the paste onto the 20µm-thick aluminum foil (weight increase after coating: 140mg/cm²⁾. After the process of drying (110-120°C), grinding, cutting (size: 37.5*59.5.5mm²⁾ and 24h vacuum drying(120-130°C) , a positive electrode is formed.

The preparation steps of negative electrode are as follows: a total of 500g of hard carbon and PVDF in a mass ratio of 90:10 are blended into paste, and coated onto the 16µm aluminum foil (weight increase after coating: 90mg/cm²⁾. After the process of drying (110- 120°C), grinding, cutting (size: 37.5*59.5mm²⁾ and 24h vacuum drying (120-130°C) , a negative electrode is ready. A three-layer composite membrane is selected as a separator. The positive electrode (8 pieces of positive electrodes), separator, and the negative electrodes (9pieces) are stacked to form a cell. The positive electrodes are held together, and welded onto an aluminum lug. The negative electrode are held together, and welded onto a nickel lug. The welded cell is placed into the aluminum plastic composite case, and 10g of 1mol/L LiPF₆ - EC(ethylene carbonate)/DEC(diethyl carbonate) (1:1) electrolyte is inject in to form a prismatic super capacitor battery. After electrochemical formation, performance testing of the super battery is carried out. The testing procedures are as follows: charge with a current of 5A to 3.7V, shelve for 5min, and then discharge at 5A to 2.3V. The resulting specific energy of the super capacitor battery is 20.3Wh/kg and the specific power is 6000W/kg. After 10,000 cycles of charge-discharge at 5A, capacitance of the super capacitor battery remains at 96%.

### Example 12

The preparation steps of positive electrode: mix a total of 500g of LiFePO₄, porous carbon, the conductive carbon black and PVDF in a mass ratio of 85: 5:5: 5with NMP, and stir into a paste. Coat the paste onto the 20µm-thick aluminum foil (weight increase after coating: 140mg/cm²⁾. After the process of drying (110-120°C), grinding, cutting (size: 37.5*59.5.5mm²⁾ and 24h vacuum drying(120-130°C) , a positive electrode is formed.

The preparation steps of negative electrode are as follows: a total of 500g of hard carbon and PVDF in a mass ratio of 90:10 are blended into a paste, then coated onto the 16µm aluminum foil (weight increase after coating: 90mg/cm²⁾. After the process of drying (110- 120°C), grinding, cutting (size: 37.5*59.5mm²⁾ and 24h vacuum drying (120-130°C) , a negative electrode is formed. A three-layer composite membrane is selected as a separator. The positive electrode (8 pieces of positive electrodes), separator, and the negative electrodes (9pieces) are stacked to form a cell. The positive electrodes are held together, and welded onto an aluminum lug. The negative electrode are held together, and welded onto a nickel lug. The welded cell is placed into the aluminum plastic composite case, and 10g of 1mol/L LiPF₆ - EC(ethylene carbonate)/DEC(diethyl carbonate) (1:1) electrolyte is inject in to form a prismatic super capacitor battery. After electrochemical formation, performance testing of the super battery is carried out. The testing procedures are as follows: charge with a current of 5A to 3.7V, shelve for 5min, and then discharge at 5A to 2.3V. The resulting specific energy of the super capacitor battery is 65Wh/kg and the specific power is 4900W/kg. After 10,000 cycles of charge-discharge at 5A, capacitance of the super capacitor battery remains at 90%.

### Example 13

The preparation steps of positive electrode: mix a total of 500g of LiNi_{0.8}Co_{0.2}O₂, porous carbon, the conductive carbon black and PVDF in a mass ratio of 45: 45:5: 5t with NMP, and stir into a paste. The next step is coat the paste onto the 20µm-thick aluminum foil (weight increase after coating: 140mg/cm²⁾. After the process of drying (110-120°C), grinding, cutting (size: 37.5*59.5.5mm²⁾ and 24h vacuum drying(120-130°C) , a positive electrode is formed.

The preparation steps of a negative electrode are as follows: a total of 500g of hard carbon and PVDF in a mass ratio of 90:10 are blended into paste, and coated onto the 16µm aluminum foil (weight increase after coating: 90mg/cm²⁾. After the process of drying (110- 120°C), grinding, cutting (size: 37.5*59.5mm²⁾ and 24h vacuum drying (120-130°C), a negative electrode is formed. A three-layer composite membrane is selected as a separator. The positive electrode (8 pieces of positive electrodes), separator, and the negative electrodes (9pieces) are stacked to form a cell. The positive electrodes are held together, and welded onto an aluminum lug. The negative electrode are held together, and welded onto a nickel lug. The welded cell is placed into the aluminum plastic composite case, and 10g of 1mol/L LiPF₆ - EC(ethylene carbonate)/DEC(diethyl carbonate) (1:1) electrolyte is injected in to form a prismatic super capacitor battery. After electrochemical formation, performance testing of the super battery is carried out. The testing procedures areas follows: charge with a current of 5A to 4.2V, shelved for 5min, and then discharge at 5A to 2.5V. The resulting specific energy of the super capacitor battery is 71Wh/kg and the specific power is 5088W/kg. After 10,000 cycles of charge-discharge at 5A, capacitance of the super capacitor battery remains at 78%.

### Example 14

The preparation steps of a positive electrode: mix a total of 500g of LiNi₀₈Co_{0.2}O₂, porous carbon, the conductive carbon black and PVDF in a mass ratio of 20: 70:5: 5with NMP, and stir into a paste. Coat the paste onto the 20µm-thick aluminum foil (weight increase after coating: 140mg/cm²). After the process of drying (110-120°C), grinding, cutting (size: 37.5*59.5.5mm²⁾ and 24h vacuum drying(120-130°C) , a positive electrode is ready.

The preparation steps of a negative electrode are as follows: a total of 500g of hard carbon and PVDF in a mass ratio of 90:10 are blended into a paste, and coated onto the 16µm aluminum foil (weight increase after coating: 90mg/cm²⁾. After the process of drying (110- 120°C), grinding, cutting (size: 37.5*59.5mm²⁾ and 24h vacuum drying (120-130°C), a negative electrode is formed. A three-layer composite membrane is selected as a separator. The positive electrode (8 pieces of positive electrodes), separator, and the negative electrodes (9pieces) are stacked to form a cell. The positive electrodes are held together, and welded onto an aluminum lug. The negative electrode are held together, and welded onto a nickel lug. The welded cell is placed into the aluminum plastic composite case, and 10g of 1mol/L LiPF₆ - EC(ethylene carbonate)/DEC(diethyl carbonate) (1:1) electrolyte is inject in to form a prismatic super capacitor battery. After electrochemical formation, performance testing of the super battery is carried out. The testing procedures are as follows: charge with a current of 5A to 4.2V, shelve for 5min, and then discharge at 5A to 2.5V. The resulting specific energy of the super capacitor battery is 25Wh/kg and the specific power is 5570W/kg. After 10,000 cycles of charge-discharge at 5A, capacitance of the super capacitor battery remains at 83%.

### Example 15

The preparation steps of positive electrode: mix a total of 500g of LiNi_{0.8}Co_{0.2}O₂, porous carbon, the conductive carbon black and PVDF in a mass ratio of 85: 5:5: 5with NMP, and stir into a paste. Coat the paste onto the 20µm-thick aluminum foil (weight increase after coating: 140mg/cm²). After the process of drying (110-120°C), grinding, cutting (size: 37.5*59.5.5mm²⁾ and 24h vacuum drying(120-130°C) , a positive electrode is ready.

The preparation steps of a negative electrode are as follows: a total of 500g of hard carbon and PVDF in a mass ratio of 90:10 are blended into paste, and coated onto the 16µm aluminum foil (weight increase after coating: 90mg/cm²⁾. After the process of drying (110- 120°C), grinding, cutting (size: 37.5*59.5mm²⁾ and 24h vacuum drying (120-130°C), a negative electrode is ready. A three-layer composite membrane is selected as a separator. The positive electrode (8 pieces of positive electrodes), separator, and the negative electrodes (9pieces) are stacked to form a cell. The positive electrodes are held together, and welded onto an aluminum lug. The negative electrode are held together, and welded onto a nickel lug. The welded cell is placed into the aluminum plastic composite case, and 10g of 1mol/L LiPF₆ - EC(ethylene carbonate)/DEC(diethyl carbonate) (1:1) electrolyte is inject in to form a prismatic super capacitor battery. After electrochemical formation, performance testing of the super battery is carried out. The testing procedures are as follows: charge with a current of 5A to 4.2V, shelve for 5min, and then discharge at 5A to 2.5V. The resulting specific energy of the super capacitor battery is 82Wh/kg and the specific power is 4621 W/kg. After 10,000 cycles of charge-discharge at 5A, capacitance of the super capacitor battery remains at 70%.

### Example 16

The preparation steps of positive electrode: mix a total of 500g of LiNi_{1/3} Co_{1/3} Mn_{1/3}O**₂**, porous carbon, the conductive carbon black and PVDF in a mass ratio of 45: 45:5: 5with NMP, and stir into a paste. Coat the paste onto the 20µm-thick aluminum foil (weight increase after coating: 140mg/cm²⁾. After the process of drying (110-120°C), grinding, cutting (size: 37.5*59.5.5mm²⁾ and 24h vacuum drying (120-130°C), a positive electrode is formed.

The preparation steps of a negative electrode are as follows: a total of 500g of hard carbon and PVDF in a mass ratio of 90:10 are blended into paste, and coated onto the 16µm aluminum foil (weight increase after coating: 90mg/cm²⁾. After the process of drying (110- 120°C), grinding, cutting (size: 37.5*59.5mm²⁾ and 24h vacuum drying (120-130°C), a negative electrode is ready. A three-layer composite membrane is selected as a separator. The positive electrode (8 pieces of positive electrodes), separator, and the negative electrodes (9pieces) are stacked to form a cell. The positive electrodes are held together, and welded onto an aluminum lug. The negative electrode are held together, and welded onto a nickel lug. The welded cell is placed into the aluminum plastic composite case, and 10g of 1mol/L LiPF₆ - EC(ethylene carbonate)/DEC(diethyl carbonate) (1:1) electrolyte is inject in to form a prismatic super capacitor battery. After electrochemical formation, performance testing of the super battery is carried out. The testing procedures are as follows: charge with a current of 5A to 4.2V, shelving for 5min, and then discharge at 5A to 2.5V. The resulting specific energy of the super capacitor battery is 66Wh/kg and the specific power is 5225W/kg. After 10,000 cycles of charge-discharge at 5A, capacitance of the super capacitor battery remains at 90%.

### Example 17

The preparation steps of positive electrode: mix a total of 500g of LiNi_{1/3} Co_{1/3} Mn_{1/3}O₂, porous carbon, the conductive carbon black and PVDF in a mass ratio of 20: 70:5: 5with NMP, and stir into a paste. Coat the paste onto the 20µm-thick aluminum foil (weight increase after coating: 140mg/cm²⁾. After the process of drying (110-120°C), grinding, cutting (size: 37.5*59.5.5mm²⁾ and 24h vacuum drying (120-130°C) , a positive electrode is formed.

The preparation steps of a negative electrode are as follows: a total of 500g of hard carbon and PVDF in a mass ratio of 90:10 are blended into a paste, then coated onto the 16µm aluminum foil (weight increase after coating: 90mg/cm²⁾. After the process of drying (110- 120°C), grinding, cutting (size: 37.5*59.5mm²⁾ and 24h vacuum drying (120-130°C) , a negative electrode is formed. A three-layer composite membrane is selected as a separator. The positive electrode (8 pieces of positive electrodes), separator, and the negative electrodes (9pieces) are stacked to form a cell. The positive electrodes are held together, and welded onto an aluminum lug. The negative electrode are held together, and welded onto a nickel lug. The welded cell is placed into the aluminum plastic composite case, and 10g of 1mol/L LiPF₆ - EC(ethylene carbonate)/DEC(diethyl carbonate) (1:1) electrolyte is inject in to form a prismatic super capacitor battery. After electrochemical formation, performance testing of the super battery is carried out. The testing procedures are as follows: charge with a current of 5A to 4.2V, shelve for 5min, and then discharge at 5A to 2.5V. The resulting specific energy of the super capacitor battery is 23Wh/kg and the specific power is 6005W/kg. After 10,000 cycles of charge-discharge at 5A, capacitance of the super capacitor battery remains at 94%.

### Example 18

The preparation steps of a positive electrode: mix a total of 500g of LiNi_{1/3} Co_{1/3} Mn_{1/3}O₂, porous carbon, the conductive carbon black and PVDF in a mass ratio of 85: 5:5: 5with NMP, and stir into a paste. Coat the paste onto the 20µm-thick aluminum foil (weight increase after coating: 140mg/cm²⁾. After the process of drying (110-120°C), grinding, cutting (size: 37.5*59.5.5mm²⁾ and 24h vacuum drying(120-130°C) , a positive electrode is formed.

The preparation steps of negative a electrode are as follows: a total of 500g of hard carbon and PVDF in a mass ratio of 90:10 are blended into a paste, and coated onto the 16µm aluminum foil (weight increase after coating: 90mg/cm²⁾, after the process of drying (110- 120°C), grinding, cutting (size: 37.5*59.5mm²⁾ and 24h vacuum drying (120-130°C) , a negative electrode is formed. A three-layer composite membrane is selected as a separator. The positive electrode (8 pieces of positive electrodes), separator, and the negative electrodes (9pieces) are stacked to form a cell. The positive electrodes are held together, and welded onto an aluminum lug. The negative electrode are held together, and welded onto a nickel lug. The welded cell is placed into the aluminum plastic composite case, and 10g of 1mol/L LiPF₆ - EC(ethylene carbonate)/DEC(diethyl carbonate) (1:1) electrolyte is inject in to form a prismatic super capacitor battery. After electrochemical formation, performance testing of the super battery is carried out. The testing procedures are as follows: charge with a current of 5A to 4.2V, shelved for 5min, and then discharge at 5A to 2.5V. Specific energy of the super capacitor battery is 78Wh/kg and the specific power is 5000W/kg. After 10,000 cycles of charge-discharge at 5A, capacitance of the super capacitor battery remains at 83%.

It can be seen from the above cases that the positive electrode using lithium-ion intercalation compound with porous carbon, the negative electrode using hard carbon, the super capacitor battery showed good energy density, power density and cycle life. It can also be seen when using the same negative electrode, performance of the capacitor battery with different lithium ions salts have some differences. It can also be seen that the proportion of the embedded lithium-ion compounds and porous carbon have a great impact on the performance of the super capacitor battery: when the proportion of porous carbon increases, power density increases, cycle life increases, but energy density drops. It has practical value when embedded lithium-ion compounds and porous carbon ratio is between 17:1 ∼ 2:7. This can be adjusted to meet the user's needs according to the different working conditions.

What is described in the present invention are several excellent specific cases, the above cases merely illustrate the technical solution of the present invention rather than limitations of the present invention. The technical solutions or any equivalent variations made according to the present invention should belong to the scope of protection of the present invention.

## Claims

1. An organic capacitor battery with high specific energy and high specific power comprises an anode, a cathode, a separator in-between the anode and cathode, and an organic electrolyte, wherein the anode comprises a mixture of porous carbon materials and a lithium-ion intercalation compound; the cathode is a hard carbon; and the electrolyte is an organic solvent electrolyte containing lithium ions.

2. The organic capacitor battery according to claim 1, wherein the hard carbon cathode is selected from the group consisting of: resin carbon; organic polymer pyrolytic carbon; soft carbon carbonized material; and mixtures thereof.

3. The organic capacitor battery according to claim 1, wherein the lithium-ion intercalation compound is selected from the group consisting of: LiCoO₂; LiMn₂O₄; LiNiO₂; LiFePO₄; LiNi_{0.8}Co_{0.2}O₂; LiNi_{1/3} Co_{1/3} Mn_{1/3}O₂; LiMnO₂; and mixtures thereof.

4. The organic capacitor battery according to claim 1, wherein the mixture of porous carbon materials is selected from the group consisting of: activated carbon; carbon cloth; carbon fiber; carbon fiber felt; carbon aerogels; carbon nanotubes; and mixtures thereof.

5. The organic capacitor battery according to claim 1, wherein the electrolyte is selected from the group consisting of: LiClO₄; LiBF₄; LiPF₆; LiCF₃SO₃; LiN(CF₃SO₂); LiBOB; LiAsF₆; the electrolyte is mixed with one selected from the group consisting of: Me₃EtNBF₄, Me₂Et₂NBF, MeEt₃NBF₄, Et₄NBF₄, Pr₄NBF₄, MeBu₃NBF₄, Bu₄NBF₄, Hex₄NBF₄, Me₄PBF₄, Et₄PBF₄, Pr₄PBF₄, Bu₄PBF₄, and mixtures thereof; and wherein the battery further comprises one selected from the group consisting of carbonate, ethyl methyl carbonate, Methyl Propyl Carbonate, sulfurous acid vinyl ester, acrylic ester of sulfurous acid, acetic acid, vinyl acetate and acetonitrile.

6. The organic capacitor battery according to claim 1, wherein the separator is selected from the group consisting of: polyethylene micro porous composite membrane; polypropylene micro porous membrane; polypropylene/polyethylene composite membrane; inorganic ceramic membrane; paper membrane; and non-woven cloth membrane.

7. A method of making the battery of claim 1 comprising the steps of:
(1) Preparing a positive electrode of lithium-ion intercalation compound by:
(a) Blending together a lithium-ion intercalation compound, a conductive agent, and a binder to form a mixture;
(b) Stirring the mixture into a paste;
(c) Coating the paste onto an anode current collector, and
(d) Drying, grinding, cutting, and vacuum-drying to form a final positive electrode;
(2) Preparing a negative electrode by:
(a) Blending hard carbon, a conductive agent and a binder to form a mixture;
(b) Stirring the mixture into a paste;
(c) Coating the paste onto a cathode current collector;
(d) Drying, grinding, cutting and vacuum drying to form a final negative electrode;
(3) Assembling the battery by:
(a) Making a cell by stacking or winding the positive and the negative electrodes;
(b) Putting the cell into a case selected from the group consisting of: an aluminum-plastic composite case, an aluminum case, a plastic case, and a steel case for seal;
(c) Injecting in a non-aqueous electrolyte, wherein the electrolyte is an organic solvent electrolyte containing lithium ions.

8. The method according to claim 7, wherein the conductive agentis selected from the group consisting of: natural graphite, artificial graphite, carbon black, acetylene black, mesophase carbon microbeads, hard carbon, petroleum coke, carbon nanotubes, grapheme, and mixtures thereof; and the binder is selected from the group consisting of: polytetrafluoroethylene, polyvinylidene fluoride, ethylene, hydroxypropyl methyl cellulose, carboxymethyl cellulose, and styrene butadiene rubber.

9. The method according to claim 7, wherein the positive electrode current collector includes aluminum foil or aluminum mesh; and the negative electrode current collector includes copper foil or copper mesh.
